# EUROPÄISCHE PATENTSCHRIFT

(11) **EP 3 299 347 B1**
(45) Veröffentlichungstag und Bekanntmachung des Hinweises auf die Patenterteilung: **26.09.2018**
(21) Anmeldenummer: 17184431.9
(22) Anmeldetag: 02.08.2017
(51) Int. Cl.: C03C 3/089, C03C 4/20

(54) **ALUMINIUM-FREIES BOROSILIKATGLAS**
ALUMINIUM-FREE BOROSILICATE GLASS
VERRE BOROSILICATE SANS ALUMINIUM

(30) Priorität: 22.09.2016 DE 102016218244; 22.09.2016 DE 202016005820 U
(43) Veröffentlichungstag der Anmeldung: 28.03.2018
(73) Patentinhaber: Schott AG, 55122 Mainz (DE)
(72) Erfinder: Kass, Christof, 95643 Tirschenreuth (DE)
(74) Vertreter: Sawodny, Michael-Wolfgang

(56) Entgegenhaltungen:
- DE-A1- 10 337 362
- DE-C1- 19 536 708

## Beschreibung

Die Erfindung betrifft ein Aluminium-freies Borosilikatglas und dessen Verwendung.

### Hintergrund der Erfindung

Glas ist aufgrund seiner besonderen Eigenschaften, insbesondere der ausgezeichneten mechanischen Festigkeit, optischen Eigenschaften und Haltbarkeit gegenüber Chemikalien, eines der am meisten verwendeten Materialien weltweit, und ist zudem auch noch relativ kostengünstig herstellbar. Glas findet sich heutzutage in einer großen Vielfalt von Anwendungen, wie beispielweise im Bauwesen, im elektronischen Bereich, beim Transport, bei Gütern des täglichen Bedarfs, im medizinischen Sektor, in Laboranwendungen, wissenschaftlichen Ausstattungen und dergleichen.

Ein Bereich, in dem Glas eine relativ große Rolle spielt, ist beispielsweise der Pharmabereich, wo Medikamente in Glasbehältnissen, wie Fläschchen, Ampullen, Karpulen oder Spritzen, verpackt sind. Die speziellen Materialeigenschaften von Glas, insbesondere die hohe Transparenz, die gute Sterilisierbarkeit, die mechanische Beständigkeit, die geringe Durchlässigkeit und Permeabilität in Verbindung mit der hohen chemischen Beständigkeit, bewirken dessen besonders gute Eignung in diesem Bereich.

Glaszusammensetzungen, die für pharmazeutische Zwecke eingesetzt werden können, müssen hohe Anforderungen erfüllen, da das Glas in der Regel in direktem Kontakt mit einem enthaltenen Arzneimittel steht. Das Glas darf hierbei die Qualität des Inhalts durch den direkten Kontakt nicht so verändern, dass die geforderten Grenzwerte überschritten werden, d.h. das Glasmaterial darf keine Substanzen in Mengen abgeben, die die Wirksamkeit und Stabilität des enthaltenen Arzneimittels beeinträchtigen oder gar toxisch verändern.

Häufig im Pharmabereich verwendete Gläser sind Borosilikatgläser (sog. Neutralgläser) mit den Hauptbestandteilen Silizium- und Boroxid, die in der Regel auch Aluminium-, Alkali- und Erdalkalioxiden enthalten, und vergütete oder nicht vergütete Natronkalk-Silikatgläser, die Alkali- und Erdalkalioxide, im wesentlichen Natrium- und Calciumoxid enthalten.

Insbesondere Borosilikatgläser besitzen durch die relativ hohen Gehalte an B₂O₃ in der Glasmatrix von beispielsweise 10 bis 20 Gew.-% eine relativ schlechte chemische Beständigkeit gegenüber Säuren und Laugen sowie eine geringe hydrolytische Beständigkeit. Die Gläser enthalten daher üblicherweise Aluminiumoxid zur Erzielung einer guten hydrolytischen Beständigkeit und auch zur Verbesserung der Kristallisationseigenschaften. Jedoch können derartige Gläser Aluminiumionen abgeben, was für spezielle Anwendungen nachteilig sein kann. Beispielsweise wird derzeit vermutet, dass Aluminiumionen bei Menschen mit entsprechender Veranlagung gesundheitliche Schäden verursachen können. Daher sind Aluminium-haltige Gläser für konventionelle Pharmaprimärpackmittel aus Glas zur Aufbewahrung von flüssigen Arzneistoffen eigentlich nicht geeignet.

Um Eigenschaften zu modifizieren und zu verbessern und an gewünschte Anwendungen besser anzupassen, ist es stets ein Anliegen des Fachmanns, Glaszusammensetzungen zu variieren und zu verbessern. Problematisch in diesem Zusammenhang ist es jedoch, dass die Verringerung oder Vergrößerung des Anteils einer Komponente bereits eine Vielzahl von Effekten auslösen kann, die sich unterschiedlich auf die anderen Glaskomponenten und damit auch auf die Glaseigenschaften auswirkt. Die Vorgänge und Auswirkungen bei Austausch oder Modifikation von mehreren Komponenten in einer Glaszusammensetzung sind daher noch komplexer und häufig nur begrenzt oder gar nicht mehr vorhersagbar. Es ist daher relativ schwierig, maßgeschneiderte Glaszusammensetzungen für spezielle Anwendungen bereitzustellen. Ein einfacher Austausch des Aluminiumoxids durch einen oder mehrere andere Bestandteile, um die durch Aluminiumoxid beeinflussten physikalischen und glastechnischen Eigenschaften zu erzielen, gelingt daher nicht. Vielmehr sind völlige Neuentwicklungen oder weitreichende Änderungen in der Glaszusammensetzung erforderlich.

Weiterhin sind zahlreiche Vorschläge aus dem Stand der Technik für Borosilikatgläser bekannt geworden. Nachfolgend sollen einige Glaszusammensetzungen beschrieben werden:
Beispielweise beschreibt die DE 44 30 710 C1 ein borsäurearmes Borosilikatglas mit hoher chemischer Beständigkeit und seine Verwendung. Das Borosilikatglas hoher chemischer Beständigkeit ist charakterisiert durch eine Zusammensetzung in Gew.-% auf Oxidbasis von

| | |
|---|---|
| SiO₂ | > 75 |
| B₂O₃ | 1 - < 9 |
| Al₂O₃ | 3 - 6 |
| Li₂O | 0 - 4 |
| Na₂O | 0 - 8 |
| K₂O | 0 - 6 |
| MgO | 0 - 3 |
| CaO | 0 - 3 |
| BaO | 0 - 2 |
| SrO | 0 - 2 |
| ZnO | 0 - 3 |
| ZrO₂ | 0 - 3 |
| SnO₂ | 0 - 3 |
| SnO | 0 - 3 |
| TiO₂ | 0 - 2 |
| CeO₂ | 0 - 2 |
| Fe₂O₃ | 0 - 1 |
| mit | |
| SiO₂ + B₂O₃ | > 83 |
| SiO₂ : B₂O₃ | > 8 |
| SiO₂ + Al₂O₃ + ZrO₂ | > 83 |
| Li₂O + Na₂O + K₂O | 5 - 10 |

| | |
|---|---|
| MgO + CaO + BaO + SrO + ZnO | ≤ 3. |

Das borsäurearme Borosilikatglas zeichnet sich durch hohe Beständigkeit mit einer Laugenbeständigkeit nach DIN 52322 der Klasse 1, eine Wärmedehnung α20/300 zwischen 4,0 - 5,3 x 10⁻⁶ K⁻¹, einem Verhältnis α'/ α der Wärmedehnungskoeffizienten oberhalb T_{g}(α') zu unterhalb T_{g} (a) von 4 bis 8, einer Glastransformationstemperatur zwischen 500°C und 600°C, hoher Strahlungsdurchlässigkeit und einer UV-Transmission 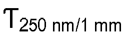 von 0 - 70% bzw. 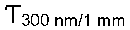 von 0 - 91 % aus. Die Gläser weisen einen hohen SiO₂-Anteil von > 75 Gew.-% und SiO₂ + B₂O₃ > 83 Gew.-% in Verbindung mit einem Gewichtsverhältnis SiO₂ : B₂O₃> 8 auf, was diese zwar chemisch hoch beständig macht, jedoch ebenfalls zu hohen Verarbeitungstemperaturen führt.

Weiterhin sind in der DE 103 37 362 A1 und der US 2004/0113237 A1 Aluminium-freie Borosilikatgläser beschrieben, wobei das Glas die folgende Zusammensetzung (in Gew.-% auf Oxidbasis) aufweist:

| | |
|---|---|
| SiO₂ | 60 - 78 |
| B₂O₃ | 7 - 20 |
| Li₂O | 0 - 2 |
| Na₂O | 0 - 4 |
| K₂O | 3 - 12 |
| MgO | 0 - 2 |
| CaO | 0 - 2 |
| mit MgO + CaO | 0 - 3 |
| BaO | 0 - 3 |
| ZnO | 0 - 2 |
| ZrO₂ | 0,8 - 12 |
| TiO₂ | 0 - 10 |
| CeO₂ | 0 - 1 |
| F⁻ | 0 - 0,6 |

sowie gegebenenfalls übliche Läutermittel in üblichen Mengen.

Ferner beschreibt die US 7 144 835 B2 ein Aluminium-freies Borosilikatglas mit chemischer Beständigkeit und mit einer Zusammensetzung in Gew.-% auf Oxidbasis:

| | |
|---|---|
| SiO₂ | 67 - 75 |
| B₂O₃ | 9 - 18 |
| Li₂O | 0 - 1 |
| Na₂O | 0 - 3 |
| K₂O | 5 - 10 |
| mit Li₂O + Na₂O + K₂O | 5,5 - 13,5 |
| CaO | 0 - 1 |
| BaO | 0 - 1 |
| ZnO | 0 - 1 |
| TiO₂ | 0 - 1 |
| ZrO₂ | 0,8 - 10,5 |
| CeO₂ | 0 - 0,4 |
| F⁻ | 0 - 0,6 |

sowie gegebenenfalls mindestens ein Läutermittel in einer Standardmenge.

Die in der DE 103 37 362 A1, der US 2004/0113237 A1 und der US 7 144 835 B2 beschriebenen Beispielzusammensetzungen A1 bis A11 zeigen sämtlich nur relativ moderate Kristallisationseigenschaften. Abhängig vom eingesetzten Ziehverfahren und den zu produzierenden Glaserzeugnissen kann es daher zu unerwünschten Kristallisationen des Glases kommen.

Aus der DE 195 36 708 C1 ist ein zirkon- und lihiumoxidhaltiges Borosilicatglas hoher chemischer Beständigkeit und geringer Viskosität mit einer hydrolytischen Beständigkeit, einer Säurebeständigkeit, einer Laugenbeständigkeit, sowie mit geringen Verarbeitungstemperaturen und einer Wärmedehnung α_{20/300} = 4,9 x 10⁻⁶ K⁻¹ bekannt geworden. Das Glas aus der DE 195 36 708 C1 hat eine Zusammensetzung (in Gewichtsprozent auf Oxidbasis) von SiO₂ 73-75; B₂O₃7-10; Al₂O₃ 5-7; ZrO₂ 1-3; Li₂O 0,5-1,5; Na₂O 0-10; K₂O 0-10; MgO 0-3; CaO 0-3; BaO 0-3; SrO 0-3; ZnO 0-3;
Verhältnis SiO₂/B₂O₃≥7,5; ∑ SiO₂ + Al₂O₃ + ZrO₂ 80-83 sowie ∑ MgO + CaO + BaO + SrO + ZnO ≤ 3 und Flouride 0-3. Besonders geeignet ist das Glas für die Verwendung als vielseitig einsetzbares Pharmaprimärpackmittel, z.B. als Ampullenglas.

Der vorliegenden Erfindung liegt demnach die Aufgabe zugrunde, die oben geschilderten Nachteile des Standes der Technik zu vermeiden und ein Borosilikatglas zu Verfügung zu stellen, das Aluminium-frei ist, über verbesserte Kristallisationseigenschaften gegenüber den bekannten Gläsern aus dem Stand der Technik verfügt und daher eine geringe Neigung zur Kristallisation zeigt. Weiterhin soll das Borosilikatglas auch für die Verwendung im pharmazeutischen Bereich geeignet sein und die hohen Anforderungen, die an Pharmagläser gestellt werden, erfüllen.

### Beschreibung der Erfindung

Erfindungsgemäß wird die Aufgabe der vorliegenden Erfindung durch ein Aluminium-freies Borosilikatglas gelöst, umfassend oder bestehend aus der folgenden Glaszusammensetzung (in Gew.-% auf Oxidbasis):

| | |
|---|---|
| SiO₂ | 70 - 80 |
| B₂O₃ | 8 - 14 |
| Al₂O₃ | 0 |
| Na₂O | 0 - 4 |
| K₂O | 3 - 10 |
| Li₂O | 0 |
| Summe Na₂O + K₂O | 3 - 14 |
| CaO | 0 - 1 |
| MgO | 0 - 1 |
| BaO | 0 - 1 |
| SrO | 0 - 1 |
| Summe CaO + MgO + BaO + SrO | 0 - 2 |
| ZnO | 0 - 1 |
| ZrO₂ | 3,6 - 14 |
| TiO₂ | 0 - 10 sowie |
| | |
| ein oder mehrere Läutermittel | 0,01 - 2,0, |

wobei das Gewichts-Verhältnis von ZrO₂ : K₂O im Bereich von 1,2 : 1 bis 1,4 : 1 vorliegt.

Eine bevorzugte Ausführungsform ist ein Aluminium-freies Borosilikatglas, umfassend oder bestehend aus der folgenden Glaszusammensetzung (in Gew.-% auf Oxidbasis):

| | |
|---|---|
| SiO₂ | 70 - 78 |
| B₂O₃ | 9 - 13 |
| Al₂O₃ | 0 |
| Na₂O | 0,3 - 3 |
| K₂O | 4 - 8 |
| Li₂O | 0 |
| Summe Na₂O + K₂O | 4,3 - 11 |
| CaO | 0 - 0,5 |
| MgO | 0 - 0,5 |
| BaO | 0 - 0,5 |
| SrO | 0 - 0,5 |
| Summe CaO + MgO + BaO + SrO | 0 - 1 |
| ZnO | 0 - 0,75 |
| ZrO₂ | 4,8 - 11,2 |
| TiO₂ | 0 - 1 sowie |
| | |
| ein oder mehrere Läutermittel | 0,01 - 2,0, |

wobei das Gewichts-Verhältnis von ZrO₂ : K₂O im Bereich von 1,2 : 1 bis 1,4 : 1 vorliegt.

Gegenstand dieser Erfindung ist demnach ein Aluminium-freies und kristallisationsarmes Borosilikatglas mit obiger Glaszusammensetzung. Das Glas stellt eine Weiterentwicklung der Gläser der DE 103 37 362 A1 dar.

Bekanntermaßen enthalten Gläser Aluminiumoxid, um eine gute hydrolytische Beständigkeit zu erhalten und die Kristallisationseigenschaften zu verbessern. Das erfindungsgemäße Borosilikatglas wird ohne Verwendung von Aluminiumoxid-Rohstoff hergestellt und weist dennoch in überraschender Weise eine sehr gute Beständigkeit und ausgezeichnete Kristallisationseigenschaften auf.

Der Begriff "kristallisationsarmes" Borosilikatglas bedeutet, dass ein Borosilikatglas mit geringer Neigung zur Kristallisation bereitgestellt wird. Die Neigung zur Kristallisation kann beispielweise durch die Höhe der Kristallisationsgeschwindigkeit [in µm/min] festgestellt werden. Das kristallisationsarme Borosilikatglas der vorliegenden Erfindung weist bevorzugt eine maximale Kristallisationsgeschwindigkeit (KGₘₐₓ) von ≤ 0,05 µm/min, bevorzugter ≤ 0,04 µm/min auf (gemessen bei einem Kristallisationsbereich von 700 - 1115 °C und einer Temperatur T(KGₘₐₓ) von ≤ 1000°C. Dies gilt für eine Messzeit von 1h.

Die Bestimmung der Kristallisationsgeschwindigkeit erfolgte erfindungsgemäß nach der Gradientenmethode. Dazu werden Granulatproben (0,5 - 1,0 mm) des betreffenden Glases in Anlehnung an ASTM C 829 - 81 (Reapproved 2010) in einem Gradientenofen getempert. Anschließend werden die jeweils längsten Kristalle mikroskopisch vermessen. Die Kristallwachstumsgeschwindigkeit in µm/min ergibt sich dann als Quotient aus der Kristallgröße und der Temperzeit.

Das Borosilikat-Grundglas enthält im Rahmen der Erfindung bevorzugt mindestens 70 Gew.-%, vorzugsweise mindestens 70,5 Gew.-%, noch bevorzugter mindestens 71 Gew.-%, ganz besonders bevorzugt mindestens 71,5 Gew.-% an SiO₂. Die Höchstmenge an SiO₂ beträgt 80 Gew.-%, bevorzugter 79,5 Gew.-%, noch bevorzugter 79, ganz besonders bevorzugt 78 Gew.-%. Ein bevorzugter Bereich des SiO2-Gehalts liegt bei 70 bis 78 Gew.-%. Je nach beabsichtigter Anwendung des Glases kann der SiO2-Gehalt variieren und sich vorteilhaft auf die gewünschten Eigenschaften, wie hohe chemische Beständigkeit, insbesondere hohe Säurebeständigkeit, auswirken.

B₂O₃ ist erfindungsgemäß im Glas in einer Menge im Bereich von 8 bis 14 Gew.-%, bevorzugt 8,5 - 13,5 Gew.-%, bevorzugter 8,75 - 13,25 Gew.-%, noch bevorzugter 9 - 13 Gew.-% vorhanden.. B₂O₃ dient im Wesentlichen zur Erniedrigung der thermischen Ausdehnung, der Verarbeitungstemperatur und der Schmelztemperatur bei gleichzeitiger Verbesserung der chemischen Beständigkeit, insbesondere der hydrolytischen Beständigkeit. Eine Überschreitung des B₂O₃-Gehalts von 14 Gew.-% hat den Nachteil, dass bei der Glasschmelze höhere Anteile von insbesondere Boroxid verdampfen und sich im Abgasbereich störend niederschlagen. Eine Unterschreitung eines B₂O₃-Gehalts von 8 Gew.-% hat den Nachteil, dass die Verarbeitungstemperatur zu sehr ansteigt und das Einschmelzverhalten verschlechtert wird.

Das Glas ist bis auf unvermeidliche Verunreinigungen frei von Al₂O₃. Dies hat den Vorteil, dass ein Herauslösen von Aluminiumionen aus dem Glas gänzlich vermieden werden kann und nachteilige Wirkungen hierdurch unterbleiben.

Für das erfindungsgemäße Glas sind die Anteile der einzelnen Alkalioxide in bestimmten Grenzen festgelegt, wodurch beispielsweise die hydrolytische Beständigkeit im Vergleich zu bekannten Gläsern aus dem Stand der Technik verbessert wird.

Das Glas ist bis auf unvermeidliche Verunreinigungen frei von Li₂O. Überraschend wurde festgestellt, dass Lithiumoxid die Kristallisationsgeschwindigkeit erhöht und damit die Kristallisationseigenschaften des Glases deutlich verschlechtert. Aus diesem Grund sind die erfindungsgemäßen Gläser generell Lithium-frei.

Von den Alkalioxiden ist Na₂O erfindungsgemäß in einer Menge von 0 bis 4 Gew.-%, bevorzugt in einer Menge von 0,3 bis 3 Gew.-% vorhanden. Es können auch Ausführungsformen bevorzugt sein, in denen Na₂O bevorzugt in einer Menge von 0,5 bis 3,0 Gew.-%, insbesondere in einer Menge von 0,5 bis 2,8 Gew.-%, enthalten ist. In ganz besonders bevorzugten Ausführungsformen enthält das Glas mindestens 0,7 Gew.-% Na₂O.

Der Gehalt an K₂O beträgt 3 bis 10 Gew.-%, bevorzugt 3,5 bis 9,5 Gew.-%, bevorzugter 3,75 bis 9 Gew.-%, noch bevorzugter 4 bis 8,5 Gew.-% insbesondere 4 bis 8 Gew.-%. In ganz besonders bevorzugten Ausführungsformen enthält das Glas mindestens 4,5 Gew.-% K₂O.

Eine Überschreitung des jeweils angegebenen Alkalioxid-Gehalts hat den Nachteil, dass sich die hydrolytische Beständigkeit des Glases verschlechtert. Eine Unterschreitung des jeweiligen Alkalioxid-Gehalts hat den Nachteil, dass die Einschmelzbarkeit verschlechtert wird.

Die Summe aus Na₂O + K₂O beträgt im erfindungsgemäßen Glas 3 bis 14 Gew.-%, bevorzugter 3,8 bis 12,5 Gew.-%, noch bevorzugter 4,15 bis 12 Gew.-%, ganz besonders bevorzugt 4,3 bis 11 Gew.-%.

Zur Erzielung einer guten hydrolytischen Beständigkeit und besonders guter Kristallisationseigenschaften enthalten die Gläser die Alkalioxide von Natrium und Kalium gemäß den oben angegebenen Bereichen.

Gemäß einer bevorzugten Ausführungsform wird zusätzlich das Gewichts-Verhältnis von K₂O : Na₂O auf > 1,0 : 1, noch bevorzugter > 2,0 : 1 eingestellt. Somit beträgt das Gewichts-Verhältnis K₂O : Na₂O > 1 : 1, besonders bevorzugt > 1,5 : 1, ganz besonders bevorzugt > 2 : 1. Der Begriff ">1" oder "mehr als 1" bedeutet beispielsweise 1,01 oder größer; der Begriff "> 2" oder "mehr als 2" bedeutet beispielsweise 2,01 oder größer. Mit anderen Worten wird bei einer vorgegebenen Menge von Na₂O die Menge an K₂O (Gew.-%) bevorzugt so festgelegt, dass diese mehr als das 1 fache, bevorzugter mehr als das 2fache der Menge von Na₂O (Gew.-%) darstellt.

ZrO₂ ist erfindungsgemäß im Glas in einer Menge im Bereich von 3,6 bis 14 Gew.-%, bevorzugt 3,8 - 13,3 Gew.-%, bevorzugter 4,5 - 12,6 Gew.-%, noch bevorzugter 4,8 - 11,9 Gew.-%, ganz besonders bevorzugt 4,8 - 11,2 Gew.-% vorhanden. ZrO₂ verbessert in der Glaszusammensetzung die hydrolytische Beständigkeit und Laugenbeständigkeit des Glases. Zu hohe Anteile erhöhen die Verarbeitungstemperatur zu sehr, wobei die chemische Beständigkeit nicht mehr wesentlich verbessert wird.

Im erfindungsgemäßen Glas wird das Gewichts-Verhältnis von ZrO₂ : K₂O im Bereich von 1,2 : 1 bis 1,4 : 1 eingestellt. Mit anderen Worten werden die jeweiligen Mengen (Gew.-%/Gew.-%) von Zirkoniumdioxid und Kaliumoxid derart eingestellt, dass das Gewichts-Verhältnis ZrO₂ : K₂O = 1,2 bis 1,4 : 1 beträgt. Bei einer voreingegebenen Menge von K₂O (Gew.-%) wird die Menge an ZrO₂ so ausgewählt, dass diese das 1,2fache bis 1,4fache der Menge von K₂O (Gew.-%) darstellt.

Durch Einhaltung dieser Bedingung werden in überraschender Weise außerordentlich gute Kristallisationseigenschaften der Glaszusammensetzung erhalten. Gemäß einer bevorzugten Ausführungsform wird das Verhältnis von ZrO₂ : K₂O (Gew.-%/Gew.-%) im Bereich von 1,22 : 1 bis 1,4 : 1, bevorzugter im Bereich von 1,23 : 1 bis 1,39 : 1, noch bevorzugter im Bereich von 1,24 : 1 bis 1,38 : 1, insbesondere bevorzugt im Bereich von 1,25 : 1 bis 1,37 : 1, am meisten bevorzugt im Bereich von 1,25 : 1 bis 1,35 : 1 eingestellt. Durch Einhaltung des angegebenen Bereichs können die überaus guten Kristallisationseigenschaften des Glases der vorliegenden Erfindung sichergestellt werden.

In unerwarteter Weise verbessert das, wie oben beschrieben, definierte Verhältnis beider Elemente die Kristallisationseigenschaften. Das Gewichts-Verhältnis zwischen ZrO₂ und K₂O führt tatsächlich dazu, dass besonders niedrige Kristallisationsgeschwindigkeiten erzielt werden. Die angegebenen Gehalte von Kalium und Zirkonium in Kombination bewirken zudem eine gute hydrolytische Beständigkeit des Glases.

Die Erdalkalioxide Calcium, Barium, Magnesium und Strontium können Verwendung finden. Sie werden jeweils im Bereich von 0 bis 1,0 Gew.-%, bevorzugt 0 bis 0,5 Gew.-% eingesetzt; gemäß einer besonders bevorzugten Ausführungsform sind diese Erdalkalioxide nicht vorhanden, insbesondere sind gar keine Erdalkalioxide im Glas enthalten.

Die Summe aus sämtlichen Erdalkalioxiden beträgt im erfindungsgemäßen Glas daher bevorzugt 0 bis 2 Gew.-%, bevorzugter 0 bis 1 Gew.-%. Gemäß einer besonders bevorzugten Ausführungsform ist in der Glaszusammensetzung die Summe aus CaO + MgO + BaO = 0 (Null). Ganz besonders bevorzugt ist die Glaszusammensetzung bis auf unvermeidbare Verunreinigungen vollständig erdalkalifrei, also CaO + MgO + BaO + SrO = 0 (Null). Das Glas ist ganz besonders bevorzugt erdalkalifrei, da bereits relativ geringe Erdalkaligehalte eine Verschlechterung der hydrolytischen Beständigkeit und eine Verschlechterung der Kristallisationseigenschaften verursachen können. Es wurde festgestellt, dass die Verwendung von Erdalkalien keinerlei Vorteil für die Glaszusammensetzung mit sich bringt. Vielmehr wurde gefunden, dass sich bei deren Verwendung die Kristallisationsgeschwindigkeit erhöht. Daher ist es erfindungsgemäß besonders vorteilhaft, wenn überhaupt kein Erdalkalioxid in der Glaszusammensetzung vorliegt.

Der Gehalt an ZnO im Glas beträgt 0 bis 1 Gew.-%, bevorzugt 0 bis 0,75 Gew.-%, bevorzugter 0 bis 0,5 Gew.-%. In ganz besonders bevorzugten Ausführungsformen enthält das Glas bis auf unvermeidbare Verunreinigungen kein ZnO. Dies hat den Vorteil, dass keine unerwünschte Abgabe von Zn im fertigen Glas an einen möglichen Inhalt stattfinden kann.

Das Glas kann bis zu 10 Gew.-%, vorzugsweise bis zu 6 Gew.-%, bevorzugt bis zu 5 Gew.-% TiO₂ enthalten. Geringe Gehalte bis zu etwa 1 Gew.-% TiO₂ verhindern die Solarisation des Glases. TiO₂ verbessert die chemische Beständigkeit, insbesondere die Laugenbeständigkeit. Besonders bevorzugt ist ein Gehalt zwischen 0 und 1 Gew.-% TiO₂. In besonders bevorzugten Ausführungsformen kann das Glas auch, bis auf unvermeidbare Verunreinigungen, TiO₂-frei sein.

Es hat sich für die erfindungsgemäße Borosilikat-Glaszusammensetzung daher insgesamt als besonders vorteilhaft herausgestellt, wenn bis auf unvermeidbare Verunreinigungen kein Aluminiumoxid, kein Erdalkalioxid, kein Lithiumoxid, kein Zinkoxid und kein Titanoxid enthalten ist.

Das Glas kann ein oder mehrere Läutermittel enthalten. Neben dem bereits erwähnten CeO₂ können dies beispielsweise Fluoride, wie Na₂SiF₆, Chloride, wie NaCl, Sulfate, wie Na₂SO₄, sein, die in üblichen Mengen vorliegen können. D. h. je nach Menge und verwendetem Typ des Läutermittels können diese in Mengen beispielsweise im Bereich von 0,01 bis 2 Gew.-%, bevorzugter 0,01 bis 1 Gew.-%, im fertigen Glas vorliegen. Es kann zweckmäßig sein, Antimon-frei und Arsen-frei zu läutern, was insbesondere für die Verwendung als Pharmaprimärpackmittel vorteilhaft ist.

Neben den beschriebenen Glasbestandteilen können weitere Komponenten im Glas enthalten sein, die in den üblichen Mengen vorhanden sein können. Dies ist jedoch nicht bevorzugt, da die angegebenen Bereiche der Glaskomponenten kritisch sind und bei zu großer Modifizierung der Glaszusammensetzung die erzielten besonderen Eigenschaften verloren gehen können.

Verfahren zur Herstellung von Borosilikatgläsern sind bekannt. Es können die üblichen im Stand der Technik beschriebenen Herstellungsverfahren zum Einsatz kommen. Da die Qualität der Glasverpackung neben der gewählten Glaszusammensetzung und der Art und Zusammensetzung der enthaltenen Arzneimittelformulierung auch von dem für die Glasverpackung verwendeten Herstellungsverfahren mitbestimmt werden kann, ist es zweckmäßig ein geeignetes Verfahren zur Herstellung auszuwählen.

Das Glas der Erfindung wird bevorzugt in Rohrform hergestellt, um in Pharmaprimärpackmittel, wie Ampullen, Karpulen, Spritzen, etc. weiterverarbeitet werden zu können. Jedoch ist das Glas nicht hierauf beschränkt; es können aus dem Glas auch diverse andere Formen, wie z.B. Flachgläser, Stäbe oder Glasblöcke, usw. hergestellt werden.

Bekanntermaßen sind Gläsern, die eine Kristallisationsneigung aufweisen, in einem Ziehverfahren nicht herstellbar, da sie für derartige Ziehprozesse zu schnell kristallisieren. Die Kristallisationsgeschwindigkeit sollte hierbei eine Grenze von 0,1 µm/min in einem Temperaturbereich, der durch die Liquidustemperatur und diejenige Temperatur, bei der die Viskosität des Glases 10^{6,5-7,0} dPa.s beträgt, begrenzt wird, nicht überschreiten. Die Liquidustemperatur ist die Temperatur, ab deren Überschreitung ein Material komplett geschmolzen ist. In der Praxis ist es die höchste Temperatur, ab der keine Kristalle mehr beobachtet werden.

Das erfindungsgemäße Glas ist mit einem Ziehverfahren, beispielsweise mit dem Vello-Ziehverfahren problemlos herstellbar. Die Entglasungsgrenze für das Vello-Verfahren liegt, wie bereits erwähnt, erfahrungsgemäß bei einer Kristallisationsgeschwindigkeit der Entglasungskristalle von höchstens KGₘₐₓ. = 0,1 µm/min . Bei höheren Werten kann das Glas nur noch bedingt mit dem Vello-Ziehverfahren hergestellt werden. Die erfindungsgemäßen Gläser haben Kristallisationsgeschwindigkeiten KGₘₐₓ von ≤ 0,05 µm/min , so dass diese ohne Probleme eingesetzt werden können. Je niedriger die Kristallisationsgeschwindigkeit, desto größer können die maximal herstellbaren Wanddicken der Glasröhren und Stäbe sein. Dies kann für bestimmte Anwendungsbereiche vorteilhaft sein.

Das Glas ist auch mit dem Danner-Verfahren herstellbar. Hier gilt die Empfehlung, dass die Entglasungsgeschwindigkeit nicht größer als etwa 0,05 µm/min sein sollte.

Die geeigneten Rohstoffmaterialien für die Glaszusammensetzung und die Verfahrensbedingungen bei der Herstellung des Glases, wie beispielsweise die Atmosphäre im Schmelzofen, die Schmelzdauer und die Schmelztemperatur etc., sind bekannt und können vom Fachmann im Stand der Technik ohne weiteres ausgewählt und bereitgestellt werden.

Die erfindungsgemäßen Borosilikatgläser gehören sämtlich zur hydrolytischen Klasse 1 (nach ISO 720 oder USP), der Säurebeständigkeitsklasse S 1 (nach DIN 12 116) und der Laugenbeständigkeitsklasse A 1 (nach ISO 695).

Die hydrolytische Klasse HGA 1 nach der ISO 720 bedeutet, dass bei 121°C die aus Glasgries mit einer Körnung von 300 bis 425 µm nach 30 min in Wasser herausgelöste Menge an Na₂O weniger als 62 µg Na₂O/g Glasgries beträgt. Hier wurde jedoch für die Bestimmung der hydrolytischen Klasse der Glass Grain-Test aus der US-Pharmacopeia (USP) herangezogen. Die Verfahren sind nahezu identisch, lediglich das Ergebnis wird in Salzsäureverbrauch ausgedrückt, und es erfolgt keine Umrechnung auf die Na₂O-Abgabe, wie in der ISO 720.

Die Säurebeständigkeitsklasse S1 nach DIN 12 116 bedeutet, dass nach 6 Stunden Erhitzen bei Siedehitze in 6-normaler HCl der Oberflächenverlust weniger als 0,7 mg/100 cm² beträgt.

Die Laugenbeständigkeitsklasse A1 nach ISO 695 bedeutet, dass ein Gewichtsverlust bis 75 mg/dm² vorliegt, d.h. das Glas zeigt nur einen geringen Angriff.

Die Borosilikatgläser weisen daher insgesamt eine ausgezeichnete Resistenz gegenüber hydrolytischem, Säure- und auch Laugen-Angriff auf.

Weiterhin hat es sich gezeigt, dass die erfindungsgemäßen Gläser in Kontakt mit flüssigen Inhaltsstoffen, wie Wirkstofflösungen, Lösungsmitteln, z.B. Puffersystemen, oder dergleichen, die im pH-Bereich von 1 bis 11, bevorzugter im pH-Bereich von 4 bis 9, ganz besonders bevorzugt im pH-Bereich von 5 bis 7 vorliegen, hervorragende chemische Beständigkeit zeigen, und daher zu Lagerung bzw. Aufbewahrung dieser Inhaltsstoffe besonders gut geeignet sind.

Eine hervorragende chemische Beständigkeit bedeutet im Rahmen der vorliegenden Erfindung, dass die Gläser die Anforderungen an die Lagerung und Aufbewahrung flüssiger Inhaltsstoffe gemäß dem Pharmabereich in hohem Maße erfüllen, insbesondere dass das Glas eine hydrolytische Beständigkeit gemäß der hydrolytischen Klasse 1 nach ISO 720 oder USP, eine Beständigkeit gegen Säuren gemäß der Säurebeständigkeitsklasse S 1 nach DIN 12 116 und eine Beständigkeit gegen Laugen gemäß der Laugenbeständigkeitsklasse A 1 nach ISO 695 aufweist.

Die erfindungsgemäßen Gläser eignen sich daher hervorragend zur Herstellung von pharmazeutischen Behältnissen, die im Kontakt mit Inhaltsstoffen stehen und daher für deren Aufnahme und Aufbewahrung bereitgestellt werden können.

Inhaltsstoffe, die verwendet werden können, sind beispielsweise sämtliche im Pharmabereich verwendete feste und flüssige Zusammensetzungen.

Als Inhaltsstoffe können, ohne diese hierauf zu beschränken, beispielhaft genannt werden: eine flüssige Arzneimittel-Zubereitung, eine Lösung, umfassend einen oder mehrere Wirkstoffe und optional Hilfsmittel und Zusatzstoffe, Puffersysteme aller Art, z.B. Natriumbicarbonat-Puffer, wie eine 1 molare NatriumbicarbonatLösung (NaHCO₃) 8,4 % mit einem pH-Wert im Bereich von 7,0 bis 8,5; Citrat-Puffer, wie 10 mmol Citrat-Puffer pH = 6 mit 150 mmol NaCl und 0,005% Tween 20; Phosphat-Puffer, wie 10 mmol Phosphat-Puffer pH = 7,0 mit 150 mmol NaCl und 0,005% Tween 20, oder Wasser für Injektionszwecke, wie z.B. Satorius-Reinstwasser, durch 0,2 µm Filter gespült und mit einem spezifischen Widerstand von 18,2 MΩ x cm (entspricht einer Leitfähigkeit von 0.055 µS/cm). Dem Fachmann sind weitere mögliche Inhaltsstoffe ohne weiteres geläufig.

Die Eigenschaften des Borosilikatglases bewirken dessen hervorragende Eignung für die verschiedensten Verwendungen, wie z.B. für die Verwendung als Pharmaprimärpackmittel, wie Ampullen oder Fläschchen, da die in den Gefäßen aufbewahrten Substanzen, insbesondere wässrigen Lösungen, das Glas nicht nennenswert angreifen, das Glas also keine oder nur wenige Ionen, insbesondere keine Aluminiumionen, freisetzt.

Gegenstand der vorliegenden Erfindung ist daher auch die Verwendung der erfindungsgemäßen Borosilikatgläser als Pharmaprimärpackmittel, beispielsweise als Flaschen, wie große oder kleine Flaschen, insbesondere Fläschchen, wie beispielsweise Injektionsfläschchen (Vials), Ampullen, Karpulen oder Spritzen. Unter "Pharmaprimärpackmitteln" werden hier Verpackungsmittel aus Glas verstanden, die in direkten Kontakt mit einem Arzneimittel kommen. Die Verpackung schützt dabei das Arzneimittel vor Einflüssen aus der Umgebung und sichert den Arzneistoff gemäß dessen Spezifikation bis zum Gebrauch durch den Patienten.

Die Erfindung bezieht sich auch auf die Verwendung des Borosilikatglases zur Herstellung von Rohrglas in Form von Halbzeug, insbesondere für die Weiterverarbeitung zu Pharmaprimärpackmitteln.

Gegenstand der Erfindung sind auch die Pharmaprimärpackmittel, die aus dem erfindungsgemäßen Borosilikatglas bestehen. Das Pharmaprimärpackmittel ist bevorzugt ausgewählt aus Flaschen, wie großen oder kleinen Flaschen, insbesondere Fläschchen, wie Injektionsfläschchen oder Vials, Ampullen, Karpullen oder Spritzen.

Die Erfindung bezieht sich auch auf die Verwendung der Borosilikatgläser als Pharmaprimärpackmittel zur Aufnahme und Aufbewahrung von flüssigen Inhaltsstoffen, die einen pH-Wert im Bereich von 1 bis 11, bevorzugter im Bereich von 4 bis 9, ganz besonders bevorzugt im Bereich von 5 bis 7 aufweisen, wobei die flüssigen Inhaltsstoffe bevorzugt ausgewählt sind aus Wirkstofflösungen, Pufferlösungen oder Wasser für Injektionszwecke.

Die Erfindung betrifft auch eine pharmazeutische Kombination, umfassend das Pharmaprimärpackmittel, das einen flüssigen Inhaltsstoff enthält, der einen pH-Wert im Bereich von 1 bis 11, bevorzugter im Bereich von 4 bis 9, ganz besonders bevorzugt im Bereich von 5 bis 7 aufweist, wobei der flüssige Inhaltsstoff bevorzugt ausgewählt ist aus einer Wirkstofflösung, Pufferlösung oder Wasser für Injektionszwecke.

Die Erfindung bezieht sich auch auf Rohrglas in Form von Halbzeug, bestehend aus dem Borosilikatglas der vorliegenden Erfindung.

Nachfolgend wird die vorliegende Erfindung anhand von Ausführungsbeispielen erläutert, welche die erfindungsgemäße Lehre veranschaulichen, diese aber nicht beschränken sollen.

### Ausführunqsbeispiele:

### Vergleichsbeispiele 1 bis 11

Die Gläser aus dem Stand der Technik gemäß der DE 103 37 362 A1 wurden auf ihre Eignung im Hinblick auf die Kristallisationseigenschaften überprüft. Die Gläser aus den beschriebenen Beispielen A1 bis A11 sind nachfolgend angegeben:

**Tabelle 1**

| **Glasbestand teile** | **A1** | **A2** | **A3** | **A4** | **A5** | **A6** | **A7** | **A8** | **A9** | **A10** | **A11** |
|---|---|---|---|---|---|---|---|---|---|---|---|
| **SiO₂** | 73,0 | 69,5 | 73,5 | 68,6 | 76,5 | 63,6 | 63,1 | 65,0 | 65,5 | 65,5 | 65,0 |
| **B₂O₃** | 10,8 | 9,5 | 17,0 | 17,5 | 13,7 | 17,5 | 17,5 | 16,5 | 16,5 | 16,5 | 16,5 |
| **Al₂O₃** | - | - | - | - | - | - | - | - | - | - | - |
| **Li₂O** | 0,3 | 0,4 | 0,15 | 0,7 | 0,2 | 0,7 | 0,7 | 0,7 | 0,7 | 0,7 | 0,7 |
| **Na₂O** | 1,7 | 2,0 | 0,1 | 0,9 | 0,3 | 0,9 | 0,9 | 1,6 | 1,0 | 1,6 | 1,0 |
| **K₂O** | 8,8 | 9,5 | 6,2 | 8,7 | 4,8 | 8,7 | 8,7 | 7,7 | 7,7 | 7,6 | 7,7 |
| **MgO** | - | - | - | - | - | - | - | - | - | - | - |
| **CaO** | - | - | 0,9 | - | - | - | - | - | - | - | - |
| **BaO** | - | - | 0,65 | - | - | - | - | - | - | - | - |
| **ZnO** | - | - | - | 0,8 | - | 0,8 | 0,8 | 1,5 | 2,0 | 2,0 | 2,0 |
| **TiO₂** | - | - | 0,5 | - | - | 4,9 | 5,4 | 4,9 | 4,9 | 5,0 | 6,5 |
| **ZrO₂** | 5,4 | 9,0 | 1,0 | 2,8 | 4,5 | 2,8 | 2,8 | 2,0 | 1,5 | 1,0 | 1,5 |
| | | | | | | | | | | | |
| **Verhältnis ZrO₂ : K₂O** | 0,61 | 0,95 | 0,16 | 0,32 | 0,94 | 0,32 | 0,32 | 0,26 | 0,19 | 0,13 | 0,19 |

Die Gläser A1 bis A11 enthalten Li₂O. Ferner erfüllt keines der Gläser die Voraussetzung, dass das Gewichts-Verhältnis ZrO₂ : K₂O im Bereich von 1,2 bis 1,4 : 1 liegen soll. Diese Gläser zeigen tatsächlich schlechtere Kristallisationseigenschaften im Vergleich zu den erfindungsgemäßen Borosilikatgläsern.

### Beispiele A12 bis A14 und Vergleichsbeispiele V1 bis V4

Weiterhin wurden Beispiele A12 bis A14 für erfindungsgemäße Gläser und Vergleichsgläser V1 bis V4 als Vergleichsbeispiele hergestellt und deren Eigenschaften untersucht. In den nachfolgenden Tabellen 2 und 3 sind die Zusammensetzungen und Eigenschaften angegeben.

**Tabelle 2**

| **Glasbestandteile** | **Beispiel A12 Gew.-%** | **Beispiel A13 Gew.-%** | **Beispiel A14 Gew.-%** |
|---|---|---|---|
| SiO₂ | 76,4 | 73,5 | 72,4 |
| B₂O₃ | 12,3 | 10,2 | 10,2 |
| Al₂O₃ | - | - | - |
| | | | |
| Li₂O | - | - | - |
| Na₂O | 0,7 | 2,8 | 2,8 |
| K₂O | 4,7 | 6,0 | 6,3 |
| MgO | | | |
| CaO | | | |
| | | | |
| BaO | - | | |
| TiO₂ | - | | |
| ZrO₂ | 5,9 | 7,5 | 8,3 |
| Summe | 100 | 100 | 100 |
| | | | |
| Verhältnis ZrO₂ : K₂O | 1,26 | 1,25 | 1,32 |
| Verhältnis K₂O : Na₂O | 6,7 | 2,1 | 2,3 |
| Kristallisationsgeschwindigkeit µm/min | < 0,04 | < 0,05 | < 0,05 |
| USP Glasgrieß Verbrauch 0,02 M HCl/g Glas (mL) | 0,037 | 0,036 | 0,035 |
| Hydrolytische Klasse | 1 | 1 | 1 |

**Tabelle 3**

| **Glasbestandteile** | **Vergleichs beispiel V1** | **Vergleichs beispiel V2** | **Vergleichs beispiel V3** | **Vergleichs beispiel V4** |
|---|---|---|---|---|
| SiO₂ | 73,7 | 76,4 | 73,7 | 72,7 |
| B₂O₃ | 10,2 | 12,3 | 8,2 | 10,1 |
| Al₂O₃ | - | - | - | - |
| | | | | |
| Li₂O | - | 0,3 | 0,4 | 0,3 |
| Na₂O | 2,8 | 0,7 | 2,9 | 2,8 |
| K₂O | 6,3 | 4,6 | 6,2 | 6,2 |
| MgO | - | | 0,3 | |
| CaO | - | | 0,3 | |
| | | | | |
| BaO | - | | | |
| TiO₂ | - | | | |
| | | | | |
| ZrO₂ | 7,0 | 5,7 | 8,0 | 7,9 |
| Summe | 100 | 100 | 100 | 100 |
| | | | | |
| Verhältnis ZrO₂ : K₂O | 1,11 | 1,24 | 1,29 | 1,27 |
| Verhältnis K₂O : Na₂O | 2,3 | 6,6 | 2,1 | 2,2 |
| Kristallisationsgeschwindigkeit µm/min | 0,08 | 0,06 | 0,1 | 0,07 |
| USP** Glasgrieß Verbrauch 0,02 M HCl/g Glas (mL) | 0,035 | 0,038 | 0,038 | 0,041 |
| Klasse | 1 | 1 | 1 | 1 |

| | | | | |
|---|---|---|---|---|
| **USP... US-Pharmacopeia | | | | |

| | |
|---|---|
| Vergleichsbeispiel V1: | Das Glas entspricht nicht dem erfindungsgemäßen Gewichts-Verhältnis von ZrO₂ : K₂O = 1,2 bis 1,4 : 1 |
| Vergleichsbeispiel V2: | Das Glas enthält Li₂O. |
| Vergleichsbeispiel V3: | Das Glas enthält Li₂O und Erdalkalioxide. |
| Vergleichsbeispiel V4: | Das Glas enthält Li₂O. |

Die obigen Vergleichsgläser V1 bis V4 zeigen, dass das erfindungsgemäße Verhältnis von ZrO₂ : K₂O ein kritisches Verhältnis darstellt. Wenn der erfindungsgemäß definierte Bereich nicht eingehalten wird, können die gewünscht guten Kristallisationseigenschaften nicht erzielt werden. Da in den Vergleichsbeispielen die erfindungsgemäßen Bedingungen hinsichtlich der Glaszusammensetzung nicht erfüllt werden, wenn beispielsweise abweichend von der erfindungsgemäßen Lehre Li₂O vorliegt, verschlechtern sich in Vergleichsbeispielen regelmäßig die Eigenschaften der Glaszusammensetzung, d.h. die hydrolytische Beständigkeit verschlechtert sich und die Kristallisationsgeschwindigkeit nimmt deutlich zu. Die Erdalkalioxide zeigen zudem in bereits relativ geringen Gehalten eine Verschlechterung der Eigenschaften des Glases.

Erfindungsgemäß werden demnach Aluminium-freie Borosilikatgläser mit besonders guten Kristallisationseigenschaften und gleichzeitig hoher hydrolytischer Beständigkeit bereitgestellt.

## Patentansprüche

1. Aluminium-freies Borosilikatglas, umfassend oder bestehend aus der folgenden Glaszusammensetzung (in Gew.-% auf Oxidbasis):
| | |
|---|---|
| SiO₂ | 70 - 80 |
| B₂O₃ | 8 - 14 |
| Al₂O₃ | 0 |
| Na₂O | 0 - 4 |
| K₂O | 3 - 10 |
| Li₂O | 0 |
| Summe Na₂O + K₂O | 3 - 14 |
| CaO | 0 - 1 |
| MgO | 0 - 1 |
| BaO | 0 - 1 |
| SrO | 0 - 1 |
| Summe CaO + MgO + BaO + SrO | 0 - 2 |
| ZnO | 0 - 1 |
| ZrO₂ | 3,6 - 14 |
| TiO₂ | 0 - 10 sowie |
| | |
| ein oder mehrere Läutermittel | 0,01 - 2,0, |
wobei das Gewichts-Verhältnis von ZrO₂ : K₂O im Bereich von 1,2 : 1 bis 1,4 : 1 vorliegt.

2. Borosilikatglas nach Anspruch 1,
**dadurch gekennzeichnet,**
**dass** das Borosilikatglas die folgende Glaszusammensetzung (in Gew.-% auf Oxidbasis) umfasst oder hieraus besteht:
| | |
|---|---|
| SiO₂ | 70 - 78 |
| B₂O₃ | 9 - 13 |
| Al₂O₃ | 0 |
| Na₂O | 0,3 - 3 |
| K₂O | 4 - 8 |
| Li₂O | 0 |
| Summe Na₂O + K₂O | 4,3 - 11 |
| CaO | 0 - 0,5 |
| MgO | 0 - 0,5 |
| BaO | 0 - 0,5 |
| SrO | 0 - 0,5 |
| Summe CaO + MgO + BaO + SrO | 0 - 1 |
| ZnO | 0 - 0,75 |
| ZrO₂ | 4,8 - 11,2 |
| TiO₂ | 0 - 1 sowie |
| | |
| ein oder mehrere Läutermittel | 0,01 - 2,0, |
wobei das Gewichts-Verhältnis von ZrO₂ : K₂O im Bereich von 1,2 : 1 bis 1,4 : 1 vorliegt.

3. Borosilikatglas nach Anspruch 1 oder 2,
**dadurch gekennzeichnet,**
**dass** das Gewichts-Verhältnis von ZrO₂ : K₂O im Bereich von 1,22 bis 1,4 : 1, bevorzugter im Bereich von 1,23 bis 1,39 : 1, noch bevorzugter im Bereich von 1,24 bis 1,38 : 1, insbesondere bevorzugt im Bereich von 1,25 bis 1,37 : 1, am meisten bevorzugt im Bereich von 1,25 bis 1,35 : 1 liegt.

4. Borosilikatglas nach Anspruch 1,
**dadurch gekennzeichnet,**
**dass** die Summe Na₂O + K₂O im Bereich von 3,8 bis 12,5 Gew.-%, noch bevorzugter 4,15 bis 12 Gew.-%, ganz besonders bevorzugt 4,3 bis 11 Gew.-%. liegt.

5. Borosilikatglas nach einem der Ansprüche 1 bis 4,
**dadurch gekennzeichnet,**
**dass** das Gewichts-Verhältnis von K₂O : Na₂O > 1,0 : 1, noch bevorzugter > 1,5 : 1, ganz besonders bevorzugt > 2,0 : 1 beträgt.

6. Borosilikatglas nach einem der Ansprüche 1 bis 5,
**dadurch gekennzeichnet,**
**dass** die Glaszusammensetzung bis auf unvermeidbare Verunreinigungen erdalkalifrei ist.

7. Borosilikatglas nach einem der Ansprüche 1 bis 6,
**dadurch gekennzeichnet,**
**dass** die Glaszusammensetzung bis auf unvermeidbare Verunreinigungen kein Aluminiumoxid, kein Erdalkalioxid, kein Lithiumoxid, kein Zinkoxid und kein Titanoxid enthält.

8. Borosilikatglas nach einem der Ansprüche 1 bis 7,
**dadurch gekennzeichnet,**
**dass** das Glas eine maximale Kristallisationsgeschwindigkeit (KGₘₐₓ) von ≤ 0,05 µm/min, bevorzugter ≤ 0,04 µm/min, gemessen bei einem Kristallisationsbereich von 700 - 1115°C und einer Temperatur T(KGₘₐₓ) von < 1000°C aufweist.

9. Borosilikatglas nach einem der Ansprüche 1 bis 8,
**dadurch gekennzeichnet,**
**dass** das Glas eine hydrolytische Beständigkeit gemäß der hydrolytischen Klasse 1 nach ISO 720 oder USP, eine Beständigkeit gegen Säuren gemäß der Säurebeständigkeitsklasse S 1 nach DIN 12 116 und eine Beständigkeit gegen Laugen gemäß der Laugenbeständigkeitsklasse A 1 nach ISO 695 aufweist.

10. Verwendung des Borosilikatglases nach einem der Ansprüche 1 bis 9 als Pharmaprimärpackmittel, insbesondere als Behälter für pharmazeutische Produkte, bevorzugt ausgewählt aus Flaschen, wie großen oder kleinen Flaschen, insbesondere Fläschchen, wie Injektionsfläschchen oder Vials, Ampullen, Karpulen oder Spritzen.

11. Verwendung des Borosilikatglases nach Anspruch 10 als Pharmaprimärpackmittel zur Aufnahme und Aufbewahrung von flüssigen Inhaltsstoffen, die einen pH-Wert im Bereich von 1 bis 11, bevorzugter im Bereich von 4 bis 9, ganz besonders bevorzugt im Bereich von 5 bis 7 aufweisen, wobei die flüssigen Inhaltsstoffe bevorzugt ausgewählt sind aus Wirkstofflösungen, Pufferlösungen oder Wasser für Injektionszwecke.

12. Verwendung des Borosilikatglases nach einem der Ansprüche 1 bis 9 zur Herstellung von Rohrglas in Form von Halbzeug, insbesondere für die Weiterverarbeitung zu Pharmaprimärpackmitteln.

13. Pharmaprimärpackmittel, bestehend aus dem Aluminium-freien Borosilikatglas nach einem der Ansprüche 1 bis 9.

14. Pharmaprimärpackmittel nach Anspruch 13,
**dadurch gekennzeichnet, dass** es ausgewählt ist aus Flaschen, wie großen oder kleinen Flaschen, insbesondere Fläschchen, wie Injektionsfläschchen oder Vials, Ampullen, Karpulen oder Spritzen.

15. Pharmazeutische Kombination, umfassend das Pharmaprimärpackmittel nach Anspruch 13 oder 14, das einen flüssigen Inhaltsstoff enthält, der einen pH-Wert im Bereich von 1 bis 11, bevorzugter im Bereich von 4 bis 9, ganz besonders bevorzugt im Bereich von 5 bis 7 aufweist, wobei der flüssige Inhaltsstoff bevorzugt ausgewählt ist aus einer Wirkstofflösung, Pufferlösung oder Wasser für Injektionszwecke.

16. Rohrglas in Form von Halbzeug, bestehend aus dem Aluminium-freien Borosilikatglas nach einem der Ansprüche 1 bis 9.

## Claims

1. An aluminum-free borosilicate glass, comprising or consisting of the following glass composition (in wt.% on oxide basis):
| | |
|---|---|
| SiO₂ | 70-80 |
| B₂O₃ | 8-14 |
| Al₂O₃ | 0 |
| Na₂O | 0-4 |
| K₂O | 3-10 |
| Li₂O | 0 |
| total Na₂O + K₂O | 3-14 |
| CaO | 0-1 |
| MgO | 0-1 |
| BaO | 0-1 |
| SrO | 0-1 |
| total CaO + MgO + BaO + SrO | 0-2 |
| ZnO | 0-1 |
| ZrO₂ | 3.6-14 |
| TiO₂ | 0-10 and |
| one or more refining agents | 0.1-2.0, |
wherein the weight ratio of ZrO₂:K₂O is in the range of 1.2:1 to 1.4:1.

2. The borosilicate glass according to Claim 1,
**characterized in that** the borosilicate glass comprises the following composition (in wt.% on oxide basis) or consists thereof:
| | |
|---|---|
| SiO₂ | 70-78 |
| B₂O₃ | 9-13 |
| Al₂O₃ | 0 |
| Na₂O | 0.3-3 |
| K₂O | 4-8 |
| Li₂O | 0 |
| total Na₂O + K₂O | 4.3-11 |
| CaO | 0-0.5 |
| MgO | 0-0.5 |
| BaO | 0-0.5 |
| SrO | 0-0.5 |
| total CaO + MgO + BaO + SrO | 0-1 |
| ZnO | 0-0.75 |
| ZrO₂ | 4.8-11.2 |
| TiO₂ | 0-1 and |
| one or more refining agents | 0.01-2.0, |
wherein the weight ratio of ZrO₂:K₂O is in the range of 1.2:1 to 1.4:1.

3. The borosilicate glass according to Claim 1 or 2,
**characterized in that** the weight ratio of ZrO₂:K₂O is in the range of 1.22 to 1.4:1, preferably in the range of 1.23 to 1.39:1, more preferably in the range of 1.24 to 1.38:1, particularly preferably in the range of 1.25 to 1.37:1, most preferably in the range of 1.25 to 1.35:1.

4. The borosilicate glass according to Claim 1,
**characterized in that** the total Na₂O + K₂O is in the range of 3.8 to 12.5 wt.%, more preferably 4.15 to 12 wt.%, very particularly preferably 4.3 to 11 wt.%.

5. The borosilicate glass according to any one of Claims 1 to 4,
**characterized in that** the weight ratio of K₂O:Na₂O is > 1.0:1, more preferably > 1.5:1, very particularly preferably > 2.0:1.

6. The borosilicate glass according to any one of Claims 1 to 5,
**characterized in that** the glass composition is free of alkaline earth elements except for unavoidable impurities.

7. The borosilicate glass according to any one of Claims 1 to 6,
**characterized in that** the glass composition contains no aluminum oxide, no alkaline earth oxide, no lithium oxide, no zinc oxide, and no titanium oxide except for unavoidable impurities.

8. The borosilicate glass according to any one of Claims 1 to 7,
**characterized in that** the glass has a maximum crystallization speed (KGₘₐₓ) of ≤ 0.05 µm/minute, preferably ≤ 0.04 µm/minute, measured in a crystallization range of 700-1115°C and a temperature T(KGₘₐₓ) of < 1000°C.

9. The borosilicate glass according to any one of Claims 1 to 8,
**characterized in that** the glass has a hydrolytic resistance corresponding to the hydrolytic class 1 according to ISO 720 or USP, a resistance to acids corresponding to the acid resistance class S 1 according to DIN 12 116, and a resistance to bases corresponding to the base resistance class A 1 according to ISO 695.

10. A use of the borosilicate glass according to any one of Claims 1 to 9 as a pharmaceutical primary packaging material, in particular as a container for pharmaceutical products, preferably selected from bottles, such as large or small bottles, in particular small bottles, such as small injection bottles or vials, ampoules, cartridges, or syringes.

11. The use of the borosilicate glass according to Claim 10 as a pharmaceutical primary packaging material for accommodating and storing liquid contents which have a pH value in the range of 1 to 11, preferably in the range of 4 to 9, very particularly preferably in the range of 5 to 7, wherein the liquid contents are preferably selected from active ingredient solutions, buffer solutions, or water for injection purposes.

12. A use of the borosilicate glass according to any one of Claims 1 to 9 for producing glass tubing in the form of semifinished product, in particular for further processing into pharmaceutical primary packaging material.

13. A pharmaceutical primary packaging material, consisting of the aluminum-free borosilicate glass according to any one of Claims 1 to 9.

14. The pharmaceutical primary packaging material according to Claim 13, **characterized in that** it is selected from bottles, such as large or small bottles, in particular small bottles, such as small injection bottles or vials, ampoules, cartridges, or syringes.

15. A pharmaceutical combination, comprising the pharmaceutical primary packaging material according to Claim 13 or 14, which contains a liquid content, which has a pH value in the range of 1 to 11, preferably in the range of 4 to 9, very particularly preferably in the range of 5 to 7, wherein the liquid content is preferably selected from an active ingredient solution, buffer solution, or water for injection purposes.

16. Glass tubing in the form of semifinished product, consisting of the aluminum-free borosilicate glass according to any one of Claims 1 to 9.

## Revendications

1. Verre borosilicate sans aluminium, contenant ou se composant de la composition de verre suivante (en % du poids d'oxydes) :
| | |
|---|---|
| SiO₂ | 70 à 80 |
| B₂O₃ | 8 à 14 |
| Al₂O₃ | 0 |
| Na₂O | 0 à 4 |
| K₂O | 3 à 10 |
| Li₂O | 0 |
| Somme de Na₂O + K₂O | 3 à 14 |
| CaO | 0 à 1 |
| MgO | 0 à 1 |
| BaO | 0 à 1 |
| SrO | 0 à 1 |
| somme de CaO + MgO + BaO + SrO | 0 à 2 |
| ZnO | 0 à 1 |
| ZrO₂ | 3,6 à 14 |
| TiO2 | 0 à 10 et |
| un ou plusieurs agents d'affinage | 0,01 à 2,0, |
dans lequel le rapport de poids entre ZrO₂ et K₂O est compris entre 1,2 pour 1 et 1,4 pour 1.

2. Verre borosilicate selon la revendication 1, **caractérisé en ce qu'**il contient ou se compose de la composition de verre suivante (en % du poids d'oxydes) :
| | |
|---|---|
| SiO₂ | 70 à 78 |
| B₂O₃ | 9 à 13 |
| Al₂O₃ | 0 |
| Na₂O | 0,3 à 3 |
| K₂O | 4 à 8 |
| Li₂O | 0 |
| Somme de Na₂O + K₂O | 4,3 à 11 |
| CaO | 0 à 0,5 |
| MgO | 0 à 0,5 |
| BaO | 0 à 0,5 |
| SrO | 0 à 0,5 |
| Somme de CaO + MgO + BaO + SrO | 0 à 1 |
| ZnO | 0 à 0,75 |
| ZrO₂ | 4,8 à 11,2 |
| TiO2 | 0 à 1 et |
| un ou plusieurs agents d'affinage | 0,01 à 2,0, |
dans lequel le rapport de poids entre ZrO₂ et K₂O est compris entre 1,2 pour 1 et 1,4 pour 1.

3. Verre borosilicate selon la revendication 1 ou 2, **caractérisé en ce que** le rapport de poids entre ZrO₂ et K₂O est compris entre 1,22 et 1,4 pour un, de préférence entre 1,23 et 1,39 pour 1, mieux encore entre 1,24 et 1,38 pour 1, en particulier entre 1,25 et 1,37 pour 1, et tout particulièrement entre 1,25 et 1,35 pour 1.

4. Verre borosilicate selon la revendication 1, **caractérisé en ce que** la somme de Na₂O et K₂O représente entre 3,8 et 12,5 % du poids, de préférence entre 4,15 et 12 % du poids, en particulier entre 4,3 et 11 % du poids.

5. Verre borosilicate selon l'une des revendications 1 à 4, **caractérisé en ce que** le rapport de poids entre K₂O et Na₂O est supérieur à 1,0 pour 1, de préférence supérieur à 1,5 pour 1 et tout particulièrement supérieur à 2,0 pour 1.

6. Verre borosilicate selon l'une des revendications 1 à 5, **caractérisé en ce que** la composition de verre ne contient pas de métaux alcalinoterreux, hormis les impuretés inévitables.

7. Verre borosilicate selon l'une des revendications 1 à 6, **caractérisé en ce que** la composition de verre ne contient pas d'oxyde d'aluminium, d'oxyde de métaux alcalinoterreux, d'oxyde de lithium, d'oxyde de zinc ni d'oxyde de titane, hormis les impuretés inévitables.

8. Verre borosilicate selon l'une des revendications 1 à 7, **caractérisé en ce que** le verre présente une vitesse de cristallisation maximale (KGₘₐₓ) de ≤ 0,05 µm/min, de préférence ≤ 0,04 µm/min, mesurée dans une plage de cristallisation de 700 à 1115 °C et à une température à une température T(KGₘₐₓ) inférieure à 1000 °C.

9. Verre borosilicate selon l'une des revendications 1 à 8, **caractérisé en ce que** le verre a une résistance à l'hydrolyse selon la classe d'hydrolyse 1 de la norme ISO 720 ou de l'USP, une résistance aux acides selon la classe de résistance aux acides S1 de la norme DIN 12 116 et une résistance aux bases selon la classe de résistance aux bases A1 de la norme ISO 695.

10. Utilisation du verre borosilicate selon l'une des revendications 1 à 9 comme emballage primaire de produits pharmaceutiques, en particulier comme contenant pour des produits pharmaceutiques choisi de préférence parmi des bouteilles, comme des grandes ou petites bouteilles, en particulier des flacons, tels que des flacons d'injection ou des fioles, des ampoules, des cartouches ou des seringues.

11. Utilisation du verre borosilicate selon la revendication 10 comme emballage primaire de produits pharmaceutiques pour recevoir et conserver des contenus liquides ayant un pH compris entre 1 et 11, de préférence entre 4 et 9, en particulier entre 5 et 7, les contenus liquides étant de préférence choisis parmi des solutions de principes actifs, des solutions de tampons ou de l'eau pour injections.

12. Utilisation du verre borosilicate selon l'une des revendications 1 à 9 pour la fabrication d'un semi-produit tubulaire en verre destiné à être transformé en emballages primaires de produits pharmaceutiques.

13. Emballage primaire de produits pharmaceutiques composé de verre borosilicate sans aluminium selon l'une des revendications 1 à 9.

14. Emballage primaire de produits pharmaceutiques selon la revendication 13, **caractérisé en ce qu'**il est choisi parmi des bouteilles, comme des grandes ou petites bouteilles, en particulier des flacons, tels que des flacons d'injection ou des fioles, des ampoules, des cartouches ou des seringues.

15. Combinaison pharmaceutique comprenant l'emballage primaire de produits pharmaceutiques selon la revendication 13 ou 14 qui contient un contenu liquide ayant un pH compris entre 1 et 11, de préférence entre 4 et 9, en particulier entre 5 et 7, le contenu liquide étant de préférence choisi parmi des solutions de principes actifs, des solutions de tampons ou de l'eau pour injections.

16. Semi-produit tubulaire en verre composé de verre borosilicate sans aluminium selon l'une des revendications 1 à 9.
